# EUROPEAN PATENT APPLICATION

(11) **EP 2 892 049 A1**
(43) Date of publication of application: **08.07.2015**
(21) Application number: 14187970.0
(22) Date of filing: 07.10.2014
(51) Int. Cl.: G09G 3/38, G09G 3/32

(54) **Display apparatus with self light-emitting transparent display and light transmittance adjuster and method of controlling the same**

(30) Priority: 06.01.2014 KR 20140001248
(71) Applicant: Samsung Electronics Co., Ltd, Gyeonggi-do 443-742 (KR)
(72) Inventor: Kim, Hye Jin, Jeollabuk-do (KR); Lee, Won Yong, Gyeonggi-do (KR)
(74) Representative: Appleyard Lees

(57) **Abstract**

A display apparatus includes a self light-emitting transparent display and a transmittance adjuster that is disposed behind the transparent display and is configured to adjust a transmittance of external light transmitted through the transparent display.

## Description

### BACKGROUND

### 1. Field

Apparatuses and methods consistent with exemplary embodiments relate to a display apparatus, and more specifically, to a transparent display apparatus.

### 2. Description of the Related Art

Display technology serves as a medium between humans and machines and thus its importance is highlighted in today's information society. Due to the rapid progress of the computer and media industries, user needs for lightweight and thin-film displays have increased. Accordingly, efforts of manufacturers to meet user needs have increased, and new technologies, for example, a flexible display and a transparent display, have rapidly emerged.

Unlike a heavy and fragile display made of a glass plate, the flexible display may be a lightweight, small, unbreakable and deformable display made of a plastic substrate. In addition, the transparent display may have a rear background of a screen which is visible, and may be implemented either by projection onto a transparent screen or by direct configuration of a transparent screen.

Recently, the transparent display in which the transparent screen is directly configured has shown rapid technological advances. In particular, technical measures to eliminate interference due to external light while a user watches an image through the transparent display have been developing.

### SUMMARY

One or more exemplary embodiments provide a display apparatus having a transparent display and a transmittance adjuster, and a method of controlling the same.

According to an aspect of an exemplary embodiment, there is provided a display apparatus including a self light-emitting transparent display and a transmittance adjuster that is disposed behind the transparent display and configured to adjust a transmittance of external light transmitted through the transparent display.

The transparent display may include a transparent organic light emitting display (OLED).

The transmittance adjuster may include an electrochromic device.

The transmittance adjuster may be discolored according to a plurality of gray levels.

In the plurality of gray levels, as the gray level decreases, a color may become darker, and as the gray level increases, a color may become brighter.

The transparent display may be configured to display an image, and the transmittance adjuster may be discolored in at least one gray level from among the plurality of gray levels corresponding to a gray value of the image so that transmittance of the external light is adjusted.

The transparent display may include at least one first region, and the transmittance adjuster may be divided into at least one second region to correspond to a location and a size of each first region.

The display apparatus may further include a controller configured to determine a gray level of the second region based on the gray value of the first region corresponding to the second region.

The second region may be discolored in the calculated gray level from among the plurality of gray levels.

The controller may be configured to determine the gray level such that, as a gray value of the first region becomes smaller, the corresponding second region is discolored in a darker color, and, as a gray value of the first region becomes greater, the corresponding second region is discolored in a brighter color.

The controller may be configured to determine the gray level based on the smallest value from among gray values of the first region.

The controller may be configured to turn on or off the transparent display or the transmittance adjuster.

The transparent display and the transmittance adjuster may form a flexible display.

According to an aspect of another exemplary embodiment, there is provided a method of controlling a display apparatus, the method including displaying, by a self light-emitting transparent display, an image and adjusting, by a transmittance adjuster disposed behind the transparent display, a transmittance of external light transmitted through the transparent display.

The transparent display may include a transparent OLED.

The transmittance adjuster may include an electrochromic device.

The adjusting, by the transmittance adjuster, of the transmittance of external light, may include discoloring the transmittance adjuster in at least one gray level corresponding to a gray value of the image.

The transparent display may include at least one first region, and the transmittance adjuster may be divided into at least one second region to correspond to a location and a size of each first region.

The method may further include determining a gray level of the second region based on the gray value of the first region corresponding to the second region.

The discoloring of the transmittance adjuster in at least one gray level may include discoloring of the second region in the determined gray level.

In determining the gray level may include determining the gray level such that, as the gray value of the first region becomes smaller, the second region is discolored in a darker color, and, as the gray value of the first region becomes greater, the second region is discolored in a brighter color.

The method may include determining the gray level based on a smallest value from among gray values of the first region.

The method may further include turning on or off the transparent display or the transmittance adjuster.

According to an aspect of another exemplary embodiment, there is provided a display apparatus that includes a transparent display, an image processor configured to read a gray value of an image data, a controller configured to determine a gray level corresponding to the gray value of the image data, and a transmittance adjuster disposed behind the transparent display and configured to adjust an amount of external light transmitted through the transparent display according to the determined gray level.

The adjusting an amount of external light transmitted may include the transmittance adjuster being discolored in at least one determined gray level.

The transparent display may be configured to display an image corresponding to the gray value of the image data and the adjusted amount of external light transmitted through the transparent display. The transmittance adjuster may include a plurality of independent panels.

For each of the plurality of independent panels, the controller may be configured to calculate the gray level for each of the plurality of independent panels.

### BRIEF DESCRIPTION OF THE DRAWINGS

The above and/or other aspects of one or more exemplary embodiments will become apparent and more readily appreciated from the following description of the exemplary embodiments, taken in conjunction with the accompanying drawings of which:
FIG. 1 is a control block diagram of a display apparatus according to an exemplary embodiment;
FIG. 2 is a cross sectional view of a basic structure of an exemplary transparent OLED;
FIG. 3 is a diagram illustrating an exemplary operating principle of the transparent OLED;
FIG. 4 is a diagram illustrating an example in which RGB of a pixel is turned on and off;
FIG. 5 is a cross sectional view illustrating a structure and an exemplary operating principle of an electrochromic device (ECD);
FIGS. 6 and 7 are diagrams illustrating a transmittance adjuster coupled to a transparent display according to an exemplary embodiment;
FIGS. 8 to 9 are diagrams illustrating a transmittance adjuster coupled to a transparent display according to another exemplary embodiment;
FIG. 10 is a diagram illustrating an exemplary state in which power is supplied from a power supply;
FIG. 11 is a diagram illustrating an exemplary state in which power is blocked from the power supply; and
FIG. 12 is a flowchart illustrating a method of controlling a display apparatus according to an exemplary embodiment.

### DETAILED DESCRIPTION

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present description. As used herein, the term "and/or" includes any and all combinations of one or more of the associated listed items. Expressions such as "at least one of," when preceding a list of elements, should be understood to modify the entire list of elements and not as modifying the individual elements of the list.

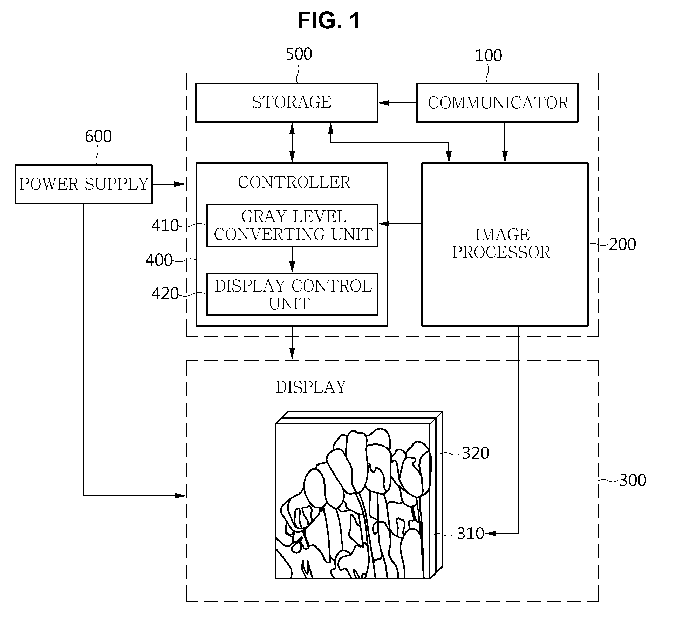

FIG. 1 is a control block diagram of a display apparatus according to an exemplary embodiment. As illustrated in FIG. 1, a display apparatus 1 may include a communicator 100, an image processor 200, a display 300, a controller 400, a storage 500, and a power supply 600.

The communicator 100 may be configured to communicate with various types of external devices according to various types of communication methods, and may obtain image data of an analog form or a digital form. In this case, the image may include at least one of a single image, a frame image, or a video. Also, the communicator 100 may include a module that communicates with the external device, for example, at least one of a broadcast receiving module, an Internet communication module, a near field communication module, a mobile communication module, and a global positioning service (GPS) module.

The broadcast receiving module may include a terrestrial broadcast receiving module including an antenna that may be configured to receive a terrestrial broadcast signal, a demodulator, an equalizer, and a digital multimedia broadcasting (DMB) module that may be configured to receive and process a DMB broadcast signal. The Internet communication device may be a module connected to an external network and may be configured to perform communication according to a communication protocol such as wireless LAN (WLAN), Wi-Fi, Wireless Broadband (WiBro), World Interoperability for Microwave Access (WiMAX), High-Speed Downlink Packet Access (HSDPA), and other types of communication protocol.

The near field communication module may be a module that may be configured to communicate with an external device located a short distance away according to a near field communication method such as Bluetooth, radio frequency identification (RFID), Infrared Data Association (IrDA), ultra wideband (UWB), ZigBee, and other near field communication methods.

The mobile communication module may be a module that may be configured to access a mobile communication network and may communicate according to various mobile communication methods such as third generation (3G), Third Generation Partnership Project (3GPP), Long Term Evolution (LTE), and other mobile communication methods. The GPS module may be a module configured to receive GPS signals from GPS satellites and may detect location information, for example, a current location of the display apparatus 1.

The image processor 200 may perform image conversion, image enhancement, image restoration, image analysis, image compression, and/or other image processing operations, on image data obtained by the communicator 100.

First, when the communicator 100 obtains image data of the analog form, the image processor 200 may convert the image data of the analog form into image data of a digital form, and may include an analog-to-digital (A/D) converter for this conversion. The image processor 200 may use Fourier transformation, discrete cosine transformation, wavelet transformation, and other methods, to convert the image data into another form, or may also inversely transform the data that has been transformed into data of another form into image data. Also, the image data may be resized or clipped such that a size of an output image can vary. An image may also be output based on a specific region, for example, a region of interest.

The image processor 200 may remove noise included in the image data using various filters or enhance the image through equalization of the image data and sharpening of the image data. In addition, a brightness and a contrast value of the image may be adjusted such that the image is more clearly visible. The image processor 200 may restore to its original form image data that has been damaged or distorted due to an error..

The image processor 200 may quantify image data, or may perform image analysis where a specific region, such as a region of interest, is extracted and a size thereof is determined. An operation may be performed for detecting an outline portion of the image data, and colors, patterns, and other similar attributes may be determined from the image data. The image processor 200 may reduce unnecessary or redundant data in the image data so that the image data is efficiently transmitted or stored. As a compression scheme, a lossless compression scheme and a lossy compression scheme may be used, depending on cases.

However, the image processing is not limited to the above processes. The image processor 200 may also perform other types of image processing. Also, the image processor 200 may use specific methods of image conversion, image enhancement, image restoration, image compression, and the like according to various methods known in the art.

The display 300 includes a transparent display 310 and a transmittance adjuster 320, and displays an image corresponding to the image data processed by the image processor 200 and colors determined based on the image data. In other words, the transparent display 310 displays the image corresponding to the image data by the image processor 200, and the transmittance adjuster 320 displays the colors determined based on the image data. When the transmittance adjuster 320 displays the determined color, it is possible to adjust transmittance of external light transmitted through the transparent display. A description of the transparent display 310, and a relation between the transparent display 310 and the external light follows.

The transparent display 310 may be a display that does not require an external light source or a back light. For example, the transparent display 310 may be a display that can be transparently implemented among self light-emitting displays such as a plasma display panel (PDP), a light emitting diode (LED), an organic light emitting display (OLED), and other similar displays. However, the transparent display is not limited to these examples. For convenience, the transparent display 310 will hereinafter be described as a transparent organic light emitting display (hereinafter referred to as a transparent OLED).

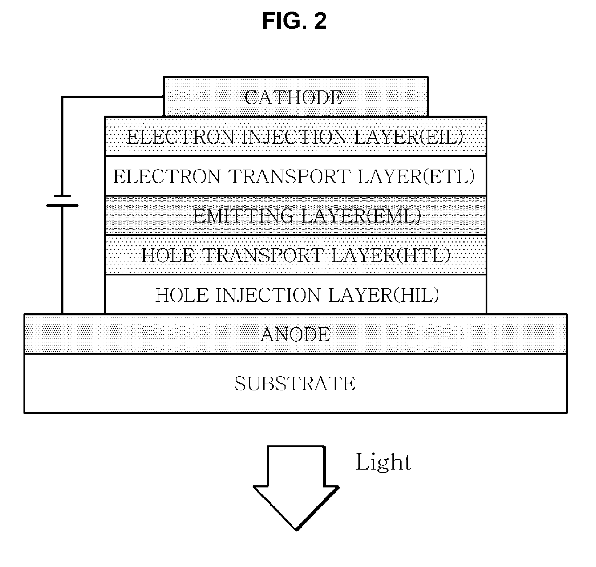

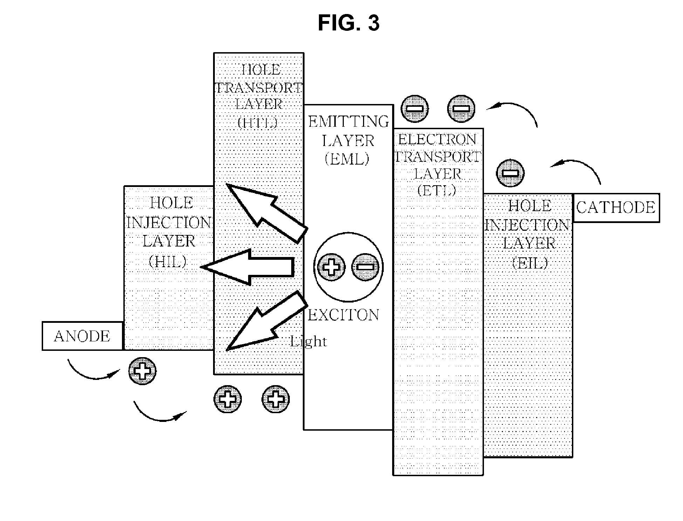

FIG. 2 is a cross sectional view of a basic structure of an exemplary transparent OLED. FIG. 3 is a diagram illustrating an exemplary operation principle of the transparent OLED.

As illustrated in FIG. 2, the transparent OLED has a general structure in which a transparent electrode layer forming an anode (+) may be coupled to a transparent substrate such as glass; and a multi-layered organic thin film having different transport capabilities, and another transparent electrode layer forming a cathode (-) are sequentially coupled thereto. As the anode, indium tin oxide (ITO), indium zinc oxide (IZO), and other similar materials which have high work functions, may be used. As the cathode, a metal such as aluminum (Al), indium (In), magnesium (Mg), and calcium (Ca), which have low work functions, or an alloy of metal materials, may be used.

The multi-layered organic thin film may include a hole injection layer (HIL) into which holes are injected from the anode side, a hole transport layer (HTL) for transporting the holes, an emitting layer (EML) for generating light, an electron transport layer (ETL) for transporting electrons, and an electron injection layer (EIL) into which the electrons are injected, and a total thickness thereof is about 100 nm. As the HIL, a material having a highest occupied molecular orbital (HOMO) such as PEDOT (PSS or Cu-PC) may be used to easily inject the holes. As the EIL, a material having a lowest unoccupied molecular orbital (LUMO) such as LiF, LiO, and CsF of about 0.5 to 1 nm may be used to easily inject the electrons. Meanwhile, to simplify the structure of the transparent OLED, unlike FIG. 2, the EIL may be excluded, or the HIL and the HTL may be integrated.

In the structure described above, a voltage may be applied to two electrode layers of the anode and the cathode to operate the OLED. As illustrated in FIG. 3, when the voltage is applied, the holes are injected from the anode (+), and the electrons are injected from the cathode (-), and these are transmitted through the HTL and the ETL, respectively, and reach the EML. The electrons and the holes that meet in the EML combine to form excitons of an excited state. Energy emitted when these excitons fall into a ground state is converted into light, whereby light is emitted. At this time, the generated light is emitted toward the anode (+) side, and a wavelength of the emitted light is determined by the energy of the excitons, i.e., an energy difference between the electrons and the holes.

The transparent OLED emits light as described above and implements full colors. More specifically, each pixel of the transparent OLED implements the full colors according to a gray value of the image data processed by the image processor 200. As a method of each pixel implementing the full colors, various methods known in the art may be used. For example, a tri-color light emitting method, a color filtering method, a color converting method, a micro cavity method, and other similar methods may be used.

In this example, the tri-color light emitting method may be a method in which a metal shadow mask is used to form an RGB emitting layer for each pixel, i.e., a method to form an R emitting layer, a G emitting layer, and a B emitting layer, and each light-emitting material is deposited. The color filtering method is a method in which a white emitting layer is formed to emit white light and RGB is obtained when the emitted light passes through R, G, and B color filters. The color converting methodi is a method in which a blue emitting layer is formed and a color converting material for converting blue into green or red is used. The micro cavity method is a method in which some of the light moving toward the anode (+) is adjusted by an optical system and is selectively reflected and transmitted, and thereby light of a specific wavelength of RGB is generated.

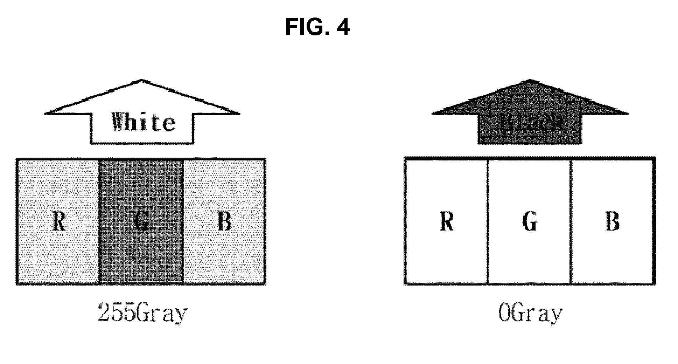

Using various methods as described above, the transparent OLED, that is, each pixel of the transparent display 310, may turn the RGB on or off according to a gray value of corresponding image data. FIG. 4 is a diagram illustrating an example in which RGB of a pixel is turned on and off.

As illustrated on the left in FIG. 4, a gray value of image data, which is received from the image processor 200 to correspond to a pixel location, is 255. In response, a corresponding pixel turns all of R, G, and B on such that a white color corresponding to a 255 gray is implemented. On the other hand, as illustrated on the right in FIG. 4, a gray value of image data, which is received from the image processor 200 to correspond to a pixel location, is 0. In this case, a corresponding pixel turns R, G, and B off such that a black color corresponding to a 0 gray is implemented.

Since the pixel is a pixel constituting a transparent display, it is influenced by background light (hereinafter referred to as external light). Thereby, the white color is easily implemented but the black color is difficult to implement. Specifically, even when the pixel performs no emission and all of the R, G, and B are turned off, since the external light is transmitted through the pixel, an accurate black color might not be implemented and contrast of the displayed image eventually decreases.

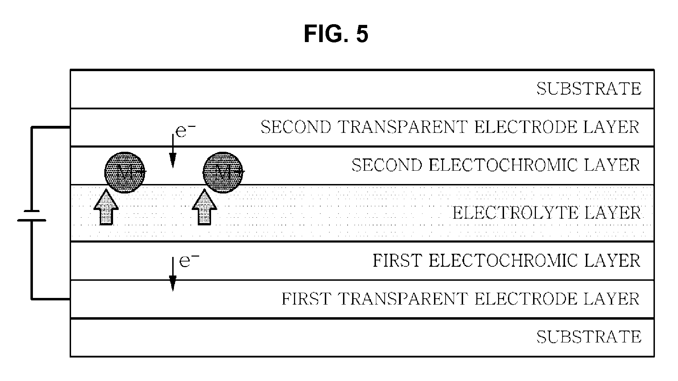

In order to increase the contrast of the image, the transmittance adjuster 320 adjusts or corrects a degree of transmission of the external light. The transmittance adjuster 320 may include, for example, an electrochromic device (hereinafter referred to as an ECD) that is discolored by an oxidation-reduction reaction according to applying of the voltage. The ECD will be described in detail with reference to FIG. 5.

FIG. 5 is a cross sectional view illustrating a structure and an exemplary operating principle of the ECD. As illustrated in FIG. 5, the ECD may have a structure in which, on a substrate such as a glass, a transparent electrode layer (transparent conductor) of the anode (+), a first electrochromic layer made of an oxidation-coloring material, an electrolyte layer for moving ions M+, a second electrochromic layer made of a reduction-coloring material, a transparent electrode layer (transparent conductor) of the cathode (-), and a substrate are sequentially or non-sequentially combined or layered. Here, the oxidation-coloring material may be a material in which colors appear in an oxidation state and the colors disappear in a reduction state. The reduction-coloring material may be a material in which colors appear in a reduction state and the colors disappear in an oxidation state.

The ions M+ may include cations such as H+, Li+, Na+, K+, Ag+, and Gu+. For example, when the ions M+ are H+, H+ conductive electrolytes may be used as the electrolyte layer, and NiO, IrO2, polyaniline, Prussian blue, and the like may be used as the anode (+). As another example, when the ions M+ are Li+, Li+ conductive electrolytes may be used as the electrolyte layer, and V2O5 and the like may be used as the anode (+). WO3 and the like may be used as the cathode (-).

When a voltage is applied to the upper and lower transparent electrode layers in the ECD configured as described above, the oxidation-reduction reaction reversely occurs in the first electrochromic layer and the second electrochromic layer; and thereby the color of the ECD is changed. For example, if the electrolyte layer is made of H+ conductive electrolytes, and the anode (+) and the cathode (-) are made of NiO and WO3, respectively, when the H+ of the first electrochromic layer moves to the second electrochromic layer through the electrolyte layer, oxidation occurs in the first electrochromic layer, a color thereof is changed to brown, and thereby the brown color appears throughout the ECD. On the other hand, when OH- of the second electrochromic layer moves to the first electrochromic layer through the electrolyte layer, reduction occurs in the second electrochromic layer, a color thereof is changed to blue, and thereby the blue color appears throughout the ECD.

The color change of the ECD may occur in a transparent state, a color change state, or between two coloring states depending on a component material of each layer. When two or more oxidation-reduction states are possible, the color change may also occur in a plurality of levels.

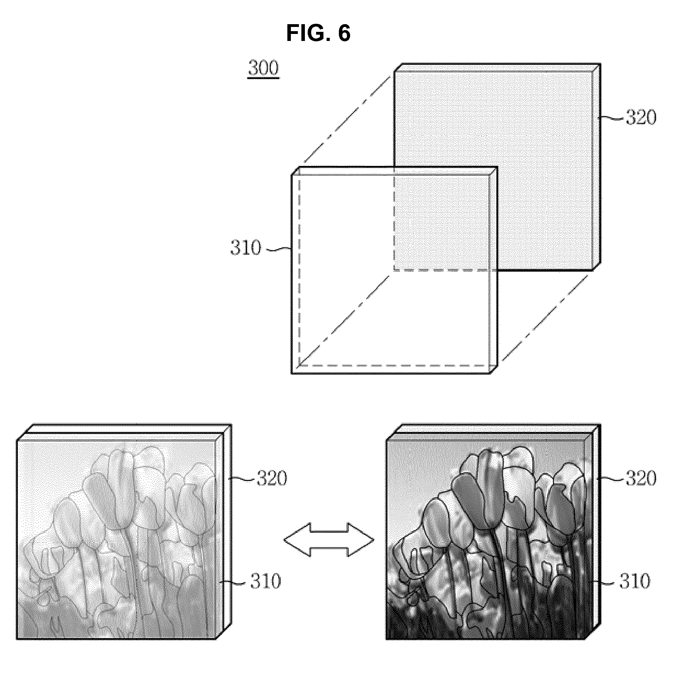

The transmittance adjuster 320 having a device such as the ECD may be discolored based on the gray value of the image data processed by the image processor 200. In this case, the discolored gray level is a total of N (N ≥ 2), where N is an integer. When the transmittance adjuster 320 is discolored, the external light transmitted through the transparent display 310 may be adjusted, and contrast of an image displayed in the transparent display 310, i.e., contrast of an image influenced by the external light, may increase. FIGS. 6 to 9 illustrate an example of the above process.

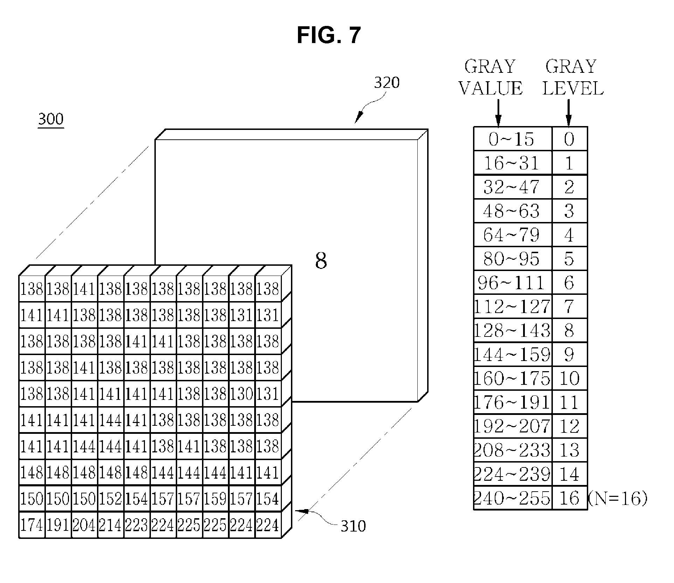

FIGS. 6 and 7 are diagrams illustrating a transmittance adjuster combined with a transparent display according to an exemplary embodiment.

As illustrated at the top of FIG. 6, the transmittance adjuster 320 includes a single panel, and may display a single color in an entire region of the transmittance adjuster 320. More specifically, the transmittance adjuster 320 may be discolored in a single gray level. In this case, the gray level may be determined by the controller 400. Specifically, the controller 400 includes a gray level converter 410 and a display controller 420, and performs control such that the gray value of the image data processed by the image processor 200 is converted into a gray level of the transmittance adjuster 320 to display or discolor in the converted gray level.

First, the gray level converter 410 calculates the gray level that can be represented by the transmittance adjuster 320. The gray level converter 410 may calculate the gray level based on, for example, the smallest value (or the darkest value) from among the gray values of the image data as illustrated in FIG. 7.

FIG. 7 illustrates that the transmittance adjuster 320 may be discolored in 16 gray levels in total. Specifically, the gray level converter 410 may separate the gray value of the image data at the same interval such that gray values of 0 to 15 correspond to a gray level 0, gray values of 16 to 31 correspond to a gray level 1, gray values of 32 to 47 correspond to a gray level 2, gray values of 48 to 63 correspond to a gray level 3, and gray values of 64 to 79 correspond to a gray level 4, etc. The gray level converter 410 may use the same rule up to gray values of 240 to 255 corresponding to a gray level 16.

If the image data has gray values of 130 to 224 and the transparent display 310 displays an image corresponding thereto, the gray level converter 410 calculates the gray level of the transmittance adjuster 320 based on 130, which is the smallest value from among the gray values. In other words, the gray level is calculated as 8 corresponding to the gray value 130.

As another example, the gray level converter 410 may calculate the gray level based on an average value of the gray values of the image data. Specifically, if the gray values of the image data are the same as those in FIG. 7 and the transmittance adjuster 320 is able to be discolored in the 16 gray levels as described above, the gray level converter 410 calculates the gray level of the transmittance adjuster 320 as 9 based on 148, which is an average value of the gray values of the image data.

When a gray level is calculated, the display controller 420 may output a control signal to the transmittance adjuster 320 such that displaying is performed in the calculated gray level. For example, when the gray level is calculated as 8, the transmittance adjuster 320 may display an image corresponding to the gray level 8 as illustrated in FIG. 7. In other words, the transmittance adjuster 320 is discolored in the gray level 8. For another example, when the gray level is calculated as 9, the transmittance adjuster 320 displays an image corresponding to the gray level 9.

When the transmittance adjuster 320 is displayed or discolored in the converted gray level in this manner, contrast of the image displayed in the transparent display 310 may increase. Referring again to FIG. 6, the bottom left illustrates a case in which the transmittance adjuster 320 is not operating and the bottom right illustrates a case in which the transmittance adjuster 320 operates. It is observed that sharpness or contrast increases when the transmittance adjuster 320 is operating.

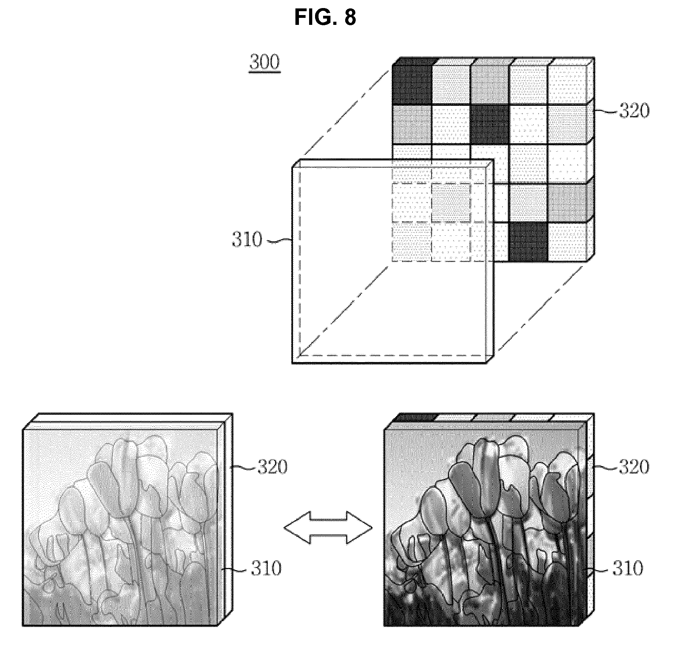

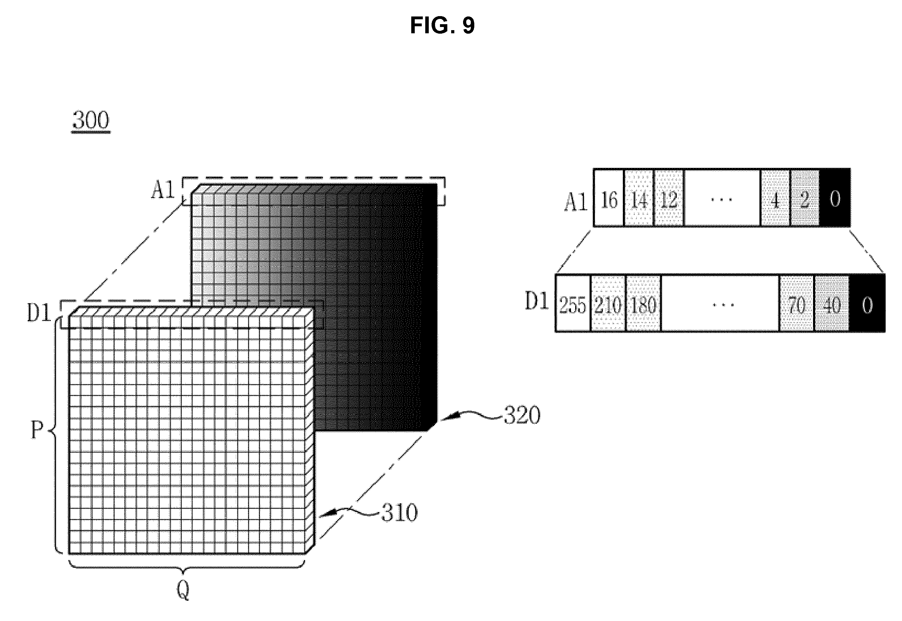

While the transmittance adjuster 320 has been described to include a single panel, the transmittance adjuster 320 may include a plurality of independent panels as illustrated in FIGS. 8 and 9. In other words, in order to further increase contrast, the transmittance adjuster 320 may also operate in local dimming. Here, the local dimming refers to the device being separated into a plurality of panels, luminance of a portion corresponding to a black color being decreased, and luminance of a portion corresponding to a white color being increased.

FIGS. 8 and 9 are diagrams illustrating a transmittance adjuster combined with a transparent display according to another exemplary embodiment.

As illustrated on the top in FIG. 8, the transmittance adjuster 320 may include a plurality of panels, and each panel may correspond to at least one pixel of the transparent display 310. In this case, the controller 400 controls each panel independently to prevent the panels from influencing each other.

In an exemplary embodiment, the transmittance adjuster 320 may include panels corresponding to each pixel as illustrated in FIG. 9. Specifically, when pixels of the transparent display 310 form P rows in a vertical direction and Q columns in a horizontal direction, the transmittance adjuster 320 may be separated into a plurality of panels which form P rows in a vertical direction and Q columns in a horizontal direction corresponding thereto.

Then, the gray level converter 410 and the display controller 420 included in the controller 400 control each panel such that the gray level is calculated for each of the plurality of panels to display in the calculated gray level.

First, the gray level converter 410 calculates the gray levels of the plurality of panels for each panel. As exemplified in FIG. 9, when pixels of a first row of the transparent display 310 display an image corresponding to gray values of 255, 210, 180, ..., 70, 40, and 0, the gray level converter 410 converts the gray values of 255, 210, 180, ..., 70, 40, and 0 into gray levels, respectively.

When the transmittance adjuster 320is discolored using 16 gray levels as described in FIG. 7, the gray level converter 410 converts the gray value 255 into a gray level 16, converts the gray value 210 into a gray level 14, converts the gray value 180 into a gray level 12, converts the gray value 70 into a gray level 4, converts the gray value 40 into a gray level 2, and converts the gray value 0 into a gray level 0. In this manner, each gray value is converted into the gray level, and panels of the first row of the transmittance adjuster 320 have the gray levels 16, 14, 12, ..., 4, 2, and 0 according to their positions.

Next, the display controller 420 outputs a control signal to each panel of the transmittance adjuster 320 such that the displaying is performed in the converted gray level. When the gray levels 16, 14, 12, ..., 4, 2, and 0 are calculated as exemplified in FIG. 9, panels of the first row display an image corresponding to the gray levels 16, 14, 12, ..., 4, 2, and 0 according to their positions. That is, the panels are discolored in the gray levels 16, 14, 12, .., 4, 2, and 0 according to their positions.

When each of the plurality of panels of the transmittance adjuster 320 is displayed or discolored in the converted gray level in the above manner, contrast of the image displayed in the transparent display 310 may further increase. Referring again to FIG. 8, the bottom left illustrates a case in which the transmittance adjuster 320 is not operating, and the bottom right illustrates a case in which the transmittance adjuster 320 operates in local dimming. It is observed that sharpness or contrast increases or improves when the transmittance adjuster 320 operates in the local dimming.

Comparing the example illustrated in FIG. 8 to the case in FIG. 6, sharpness or contrast increases when the transmittance adjuster 320 includes a plurality of panels and operates in the local dimming compared to when the transmittance adjuster 320 uses a single panel.

In another exemplary embodiment, when the transparent display 310 and the substrate of the transmittance adjuster 320 are made in a film form such as of a plastic instead of glass, and the transparent electrode layer is made of carbon nanotubes, graphene, silver nano wires, a transparent conductive oxide, a conductive polymer, or the like, the display 300 may form a flexible display.

The controller 400 controls an overall operation of the display apparatus 1.

First, the controller 400 may generate a control signal to supply power to each component of the display apparatus 1 from the power supply 600. In particular, in order to turn the display 300 on or off, power applied from the power supply 600 to the display 300 is controlled.

The controller 400 may generate a control signal such that the communicator 100 may communicate with the external device through various methods and obtain the image data, and may generate a control signal such that the image processor 200 receives the image data obtained by the communicator 100 and performs image processing such as image enhancement.

As described above, the controller 400 includes the gray level converter 410, and converts the gray value of the image data received from the image processor 200 into the gray level of the transmittance adjuster 320 or the gray level of the panels of the transmittance adjuster 320.

Also, the controller 400 may include the display controller 420, may control the transparent display 310 to display an image corresponding to the image data processed by the image processor 200, and may control the transmittance adjuster 320 or each panel of the transmittance adjuster 320 to display or discolor the gray level converted by the gray level converter 410.

The storage 500 may store data or an algorithm to manipulate the display apparatus 1.

As an example of storing the data, the storage 500 may store the image data obtained by the communicator 100. As another example of storing the data, the storage 500 may store the image data processed by the image processor 200. In other words, the storage 500 may store the image data on which image conversion, image enhancement, image restoration, image analysis, image compression, and the like have been performed in the image processor 200. Based on such image data, the transparent display 310 may display the image and the gray level converter 410 may calculate the gray level.

As still another example of storing the data, the storage 500 may also store the number of gray levels in which the transmittance adjuster 320 can be discolored and the gray level converted by the gray level converter 410. For more detailed description, referring again to the example in FIG. 7, the storage 500 may store the number of gray levels in which the transmittance adjuster 320 can be discolored as 16, and store the gray level converted by the gray level converter 410 as 8. In addition, referring again to the example in FIG. 9, the storage 500 may store the number of gray levels in which the transmittance adjuster 320 can be discolored as 16, and may store the gray levels converted by the gray level converter 410 as 16, 14, 12, ..., 4, 2, and 0. However, when the plurality of gray levels are calculated in this way, the storage 500 also stores a location (for example, an index) of the panel to be discolored corresponding thereto.

As an example of storing the algorithm, the storage 500 may store an algorithm for performing image processing such as image conversion, image enhancement, image restoration, image analysis, image compression, and the like, an algorithm for converting the gray value of the image data into the gray level, and the like.

The storage 500 may be implemented by a read only memory (ROM), a programmable read only memory (PROM), an erasable programmable read only memory (EPROM), a non-volatile memory device such as a flash memory, a volatile memory device such as a random access memory (RAM), or a storage device such as a hard disk and an optical disc. However, the storage is not limited thereto and may be implemented in any other form known in the art.

According to the control signal of the controller 400, the power supply 600 may be supplied with external power or internal power and supply power necessary for operating each component.

The power supply 600 may be implemented by a primary battery such as a mercury battery, a manganese battery, an alkaline battery, a lithium battery, and the like, or may also be implemented by a secondary battery such as a nickel-cadmium (Ni-Cd) battery, a nickel-hydrogen (Ni-MH) battery, a lead-acid battery, a lithium ion (Li-ion) battery, a lithium polymer battery, and the like. In addition, the power supply 600 may be implemented by a solar cell that generates electricity using solar energy, and the invention is not limited thereto. When the power supply 600 is supplied with the external power, a user may connect the display apparatus 1 and the external power via a wired line and charge the power supply 600.

The display 300 may be a flexible display. Similarly, the power supply 600 may also be made of a flexible material to be freely flexible or bent. For example, the power supply 600 includes a cathode current collector, a cathode electrode, an electrolyte part, an anode electrode, an anode current collector, and a coating part covering them. The cathode current collector may be made of a TiNi-based alloy having good elastic properties, carbon, a conductive material such as a carbon fiber, or other similar material. The cathode electrode may be made of a metal such as lithium, sodium, zinc, magnesium, cadmium, a hydrogen storage alloy, and lead, or a non-metal such as carbon. The anode electrode may be made of sulfur, a metal sulfide, a lithium transition metal oxide such as LiCoO2, SOCl2, MnO2, Ag2O, Cl2, NiCl2, NiOOH, a polymer electrode, and the like. The electrolyte part may be made in a gel form using PEO, PVdF, PMMA, PVAC, and the like. A general polymer resin such as PVC, HDPE, an epoxy resin, and other similar materials may be used as the coating part.

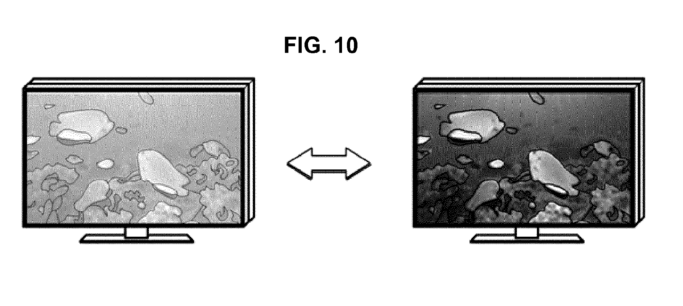

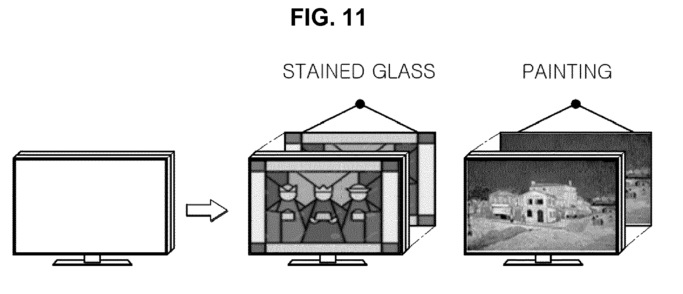

The power supply 600 may supply power to the display 300 or block the power supplied to the display 300. FIG. 10 is a diagram illustrating an exemplary state in which power is supplied from the power supply. FIG. 11 is a diagram illustrating an exemplary state in which power is blocked from the power supply.

As illustrated in FIG. 10, when the power supply 600 supplies the power, the display 300 maintains an on state. In other words, the transparent display 310 displays an image corresponding to the image data processed by the image processor 200, and the transmittance adjuster 320 disposed behind the transparent display 310 is displayed or discolored according to the gray level converted by the gray level converter 410. Accordingly, the user may watch the image having increased sharpness or contrast in front of the display 300.

However, as illustrated in FIG. 11, when the power supply 600 blocks the power, the display 300 maintains an off state or is switched to the off state. Since the transparent display 310 and the transmittance adjuster 320 do not display the image or are not discolored, the display 300 serves as a transparent window. Therefore, the display 300 may be used as an aesthetic object by arranging artwork such as stained glass or a painting in a rear thereof.

In the above descriptions, the configuration of the display apparatus 1 and functions of each component have been described according to the exemplary embodiments. Hereinafter, an exemplary method of controlling the display apparatus 1 will be described with reference to a given flowchart.

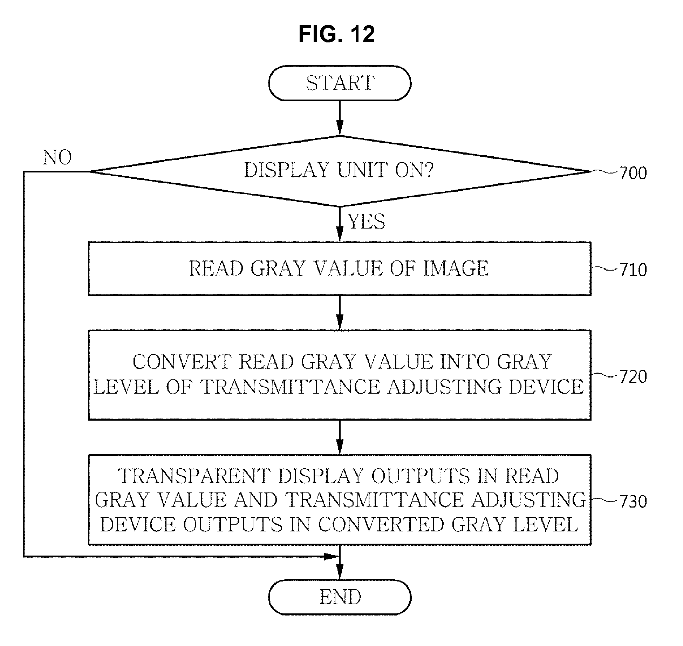

FIG. 12 is a flowchart illustrating a method of controlling a display apparatus according to an exemplary embodiment.

As illustrated in FIG. 12, the controller 400 may first determine whether the display 300 is in an on state (700). In other words, it is determined whether the display 300 is supplied with power from the power supply 600.

When it is determined that no power is supplied to the display 300, the process may end.

When it is determined that the display 300 is supplied with power, the image processor 200 reads the gray value of the image data (710). Here, the image data may also include image data obtained by the communicator 100, but may also refer to the image data that has been image-processed in the image processor 200. Also, the image may include any or all of a single image, a frame image, and a video. When the image includes a plurality of images such as the frame image or the video, the image processor 200 performs image processing on the plurality of images in chronological order, and reads the gray value of the image data in chronological order.

Next, the controller 400 converts the read gray value into the gray level of the transmittance adjuster (720).

For detailed description thereof, the transmittance adjuster 320 will be described. The transmittance adjuster 320 may be discolored in at least one gray level. A flat structure thereof may include a single panel or a plurality of independently controlled panels.

When the transmittance adjuster 320 includes a single panel, the controller 400 calculates the gray level for each image. For example, the controller 400 may calculate the gray level based on the smallest value (or the darkest value) from among the gray values of the image data. This has been described in FIG. 7.

According to another example, the controller 400 may also calculate the gray level based on an average value of the gray values of the image data. Needless to say, the above methods are only examples, and a reference value may be changed.

When the transmittance adjuster 320 includes the plurality of independent panels, the controller 400 calculates the gray level for each image corresponding to each of the plurality of panels. This has been described in FIG. 9.

When the gray level is calculated, the transparent display 310 outputs the image in the gray value read in the operation 710, and the transmittance adjuster 320 outputs the image in the converted gray level (730). In other words, the transparent display 310 displays the image corresponding to the image data processed by the image processor 200, and the transmittance adjuster 320 is displayed or discolored according to the converted gray level.

When the transmittance adjuster 320 includes a single panel, the transmittance adjuster 320 is displayed or discolored in a single gray level. On the other hand, when the transmittance adjuster 320 includes a plurality of panels, each panel is displayed or discolored in the gray level converted to correspond thereto. Accordingly, the transmittance adjuster 320 is able to display different colors according to the panel. As a result, according to the location or the color of the image displayed in the transparent display 310, the color displayed in each panel of the transmittance adjuster 320 is also adjusted. In other words, the transmittance adjuster 320 operates in local dimming.

For example, in the transparent display 310, a panel disposed behind a portion in which a white color is displayed is not discolored, and a panel disposed behind a portion in which a black color is displayed is discolored in a low gray level. Therefore, sharpness or contrast of the image displayed in the transparent display 310 is adjusted more efficiently.

When the transparent display 310 and the substrate of the transmittance adjuster 320 are made in a film form such as of a plastic instead of glass, the transparent electrode layer is made of carbon nanotubes, graphene, silver nano wires, a transparent conductive oxide, a conductive polymer, or the like, and the display 300 may form a flexible display, as described above.

According to the display apparatus and the method of controlling the same of the exemplary embodiments, it is possible to adjust transmittance of the external light transmitted through the transparent display as necessary. Accordingly, a brightness ratio, image clarity, contrast, and the like of a displayed image may increase, ultimately providing visual convenience for a user who watches the image.

While the exemplary embodiments of the display apparatus and the method of controlling the display apparatus have been described with reference to the exemplified drawings, those skilled in the art may understand that aspects of the inventive concept may be implemented in other forms without changing the spirit, scope, or essential features of the inventive concept. Therefore, the exemplary embodiments described above should be considered in an exemplary sense and not for purposes of limitation.

## Claims

1. A display apparatus, comprising:
a self light-emitting transparent display; and
a transmittance adjuster that is disposed behind the transparent display, and is configured to adjust a transmittance of external light transmitted through the transparent display.

2. The display apparatus according to claim 1,
wherein the transparent display includes a transparent organic light emitting display.

3. The display apparatus according to claim 1,
wherein the transmittance adjuster includes an electrochromic device.

4. The display apparatus according to claim 1,
wherein the transmittance adjuster is configured to be discolored according to a plurality of gray levels.

5. The display apparatus according to claim 4,
wherein, in the plurality of gray levels, as the gray level decreases, a color becomes darker, and as the gray level increases, a color becomes brighter.

6. The display apparatus according to claim 4,
wherein the transparent display displays an image, and
the transmittance adjuster is configured to be discolored in at least one gray level from among the plurality of gray levels corresponding to a gray value of the image so that transmittance of the external light is adjusted.

7. The display apparatus according to claim 6,
wherein the transparent display includes at least one first region, and
the transmittance adjuster is divided into at least one second region to correspond to a location and a size of each first region.

8. The display apparatus according to claim 7, further comprising
a controller configured to calculate a gray level of the second region based on the gray value of the first region corresponding to the second region.

9. The display apparatus according to claim 8,
wherein the second region is discolored in the calculated gray level from among the plurality of gray levels.

10. The display apparatus according to claim 9,
wherein the controller is configured to calculate the gray level such that, as a gray value of the first region becomes smaller, the corresponding second region is discolored in a darker color, and as the gray value of the first region becomes greater, the corresponding second region is discolored in a brighter color.

11. The display apparatus according to claim 9,
wherein the controller is configured to calculate the gray level based on a smallest value from among gray values of the first region.

12. The display apparatus according to claim 9,
wherein the controller is configured to turn on or off the transparent display or the transmittance adjuster.

13. The display apparatus according to claim 1,
wherein the transparent display and the transmittance adjuster form a flexible display.

14. A method of controlling a display apparatus, comprising:
displaying, by a self light-emitting transparent display, an image; and
adjusting, by a transmittance adjuster disposed behind the transparent display, a transmittance of external light transmitted through the transparent display.

15. The method according to claim 14,
wherein, the adjusting, by the transmittance adjuster, of the transmittance of external light, includes the transmittance adjuster being discolored in at least one gray level corresponding to a gray value of the image.
